# FASCICULE DE BREVET EUROPEEN

(11) **EP 3 519 206 B1**
(45) Date de publication et mention de la délivrance du brevet: **26.05.2021**
(21) Numéro de dépôt: 17780498.6
(22) Date de dépôt: 25.09.2017
(51) Int. Cl.: B60C 7/18, B60C 7/26, B60C 9/00, B60C 9/18, B60C 11/00

(54) **ROUE ÉLASTIQUE NON PNEUMATIQUE**
NICHTPNEUMATISCHES ELASTISCHES RAD
NON-PNEUMATIC ELASTIC WHEEL

(30) Priorité: 27.09.2016 FR 1659064
(43) Date de publication de la demande: 07.08.2019
(73) Titulaire: Compagnie Générale des Etablissements Michelin, 63000 Clermont-Ferrand (FR)
(72) Inventeur: DELFINO, Antonio, 63040 Clermont-Ferrand Cedex 9 (FR); BERGUERAND, Philippe, 63040 Clermont-Ferrand Cedex 9 (FR); POZO, François, 63040 Clermont-Ferrand Cedex 9 (FR); SCHROETER, Pascal, 63040 Clermont-Ferrand Cedex 9 (FR)
(74) Mandataire: Wroblewski, Nicolas Paul André
(86) Numéro de dépôt international: PCT/FR2017/052563
(87) Numéro de publication internationale: WO 2018/060578

(56) Documents cités:
- EP-A1- 3 064 371
- WO-A1-2011/046553
- WO-A1-2013/095499

## Description

### 1. DOMAINE DE L'INVENTION

La présente invention est relative à une roue élastique non pneumatique, par exemple à une roue élastique (flexible) pour un véhicule automobile du type «non-pneumatique», c'est-à-dire ne nécessitant pas de gaz de gonflage tels que l'air pour prendre sa forme utilisable, et à l'incorporation dans une telle roue d'un produit stratifié sous forme d'un composite constitué au moins en partie de fibres enrobées dans une matrice de résine.

### 2. ETAT DE LA TECHNIQUE

Les roues ou bandages non pneumatiques élastiques ou flexibles, c'est-à-dire aptes à se déformer sous une contrainte donnée et à retrouver leur forme initiale une fois libérés de cette contrainte, sont bien connus de l'homme du métier. Ils ont été décrits dans de très nombreux documents brevets, par exemple dans les brevets ou demandes de brevet EP 1 242 254 (ou US 6 769 465), EP 1 359 028 (ou US 6 994 135), EP 3 064 371 (ou US 2016/257170), US 7 201 194, WO 00/37269 (ou US 6 640 859), WO 2007/085414 (ou US 8 585 947), WO 2011/046553 (ou US 2012/216932), WO2013/095499 (ou US 2014/326374).

De tels bandages non pneumatiques, lorsqu'ils sont associés à tout élément mécanique rigide destiné à assurer la liaison entre le bandage flexible et le moyeu d'une roue, remplacent l'ensemble constitué par le bandage pneumatique, la jante et le disque tels qu'on les connaît sur la plupart des véhicules routiers actuels.

En particulier, le brevet US 7 201 194 précité décrit un bandage non pneumatique, supporté structurellement (i.e., sans pression interne), qui a pour caractéristique essentielle de comporter une bande annulaire de renfort qui supporte la charge sur le bandage et une pluralité d'éléments de support ou rayons, à très faible rigidité de compression, qui travaillent en tension pour transmettre les efforts entre la bande annulaire et le moyeu de la roue.

Cette bande annulaire (aussi appelée poutre ou bande de cisaillement) comporte deux membranes formées de câblés essentiellement inextensibles, enrobés de caoutchouc diénique naturel ou synthétique, séparées par une couche de cisaillement elle-même en caoutchouc diénique. Le principe de fonctionnement d'une telle bande est que le module de cisaillement de la couche de cisaillement est très nettement inférieur au module en extension des deux membranes, tout en étant suffisant pour pouvoir transmettre correctement les efforts d'une membrane à l'autre et faire travailler ainsi ladite bande en cisaillement.

Grâce à cette bande annulaire, il est possible de fabriquer des bandages ou roues non pneumatiques, aptes à rouler dans des conditions sévères ou agressives sans risque aucun de crevaison et sans l'inconvénient de devoir maintenir une pression d'air à l'intérieur du bandage.

En outre, comparativement aux bandages non pneumatiques de l'art antérieur, est obtenue ici une pression de contact au sol qui est plus uniformément répartie, d'où un meilleur travail du bandage, une tenue de route et une résistance à l'usure améliorées.

Toutefois, une telle bande de cisaillement en caoutchouc n'est pas dépourvue d'inconvénients.

Tout d'abord, aux températures usuelles d'utilisation, par exemple entre - 30°C et + 40°C, elle est relativement hystérétique, c'est-à-dire qu'une partie de l'énergie fournie pour le roulage est dissipée (perdue) sous forme de chaleur. Ensuite, pour des températures d'utilisation notamment plus basses, comme celles que l'on peut trouver par exemple dans des zones géographiques du type polaires, typiquement inférieures à - 50°C voire moins, il est bien connu qu'un caoutchouc diénique tel que du caoutchouc naturel devient rapidement fragile, cassant et donc inutilisable. Sous de telles conditions extrêmes, on comprend d'autre part que des fluctuations plus ou moins larges et rapides de température, combinées par exemple à des contraintes mécaniques relativement élevées, peuvent aussi entraîner des problèmes d'adhésion entre les deux membranes et la couche de cisaillement, avec un risque de flambage localisé de la bande de cisaillement au niveau des membranes et une endurance finalement dégradée.

Les demandes WO 2009/033619, WO 2009/033620, WO 2009/115254, WO 2009/135561, déposées par les Demanderesses, ont proposé d'utiliser des produits stratifiés totalement dépourvus de caoutchouc diénique, comme bande de cisaillement dans des bandages ou roues non pneumatiques tels que décrits ci-dessus, qui permettaient de pallier les inconvénients précités.

Ces stratifiés se caractérisent notamment par une couche de cisaillement qui est constituée de structures cellulaires formées de cylindres déformables en composite fibre-résine qui se sont révélées aptes à générer une déformation assimilable à du cisaillement entre ses deux membranes sous l'action de diverses sollicitations en traction, flexion ou compression, tout ceci dans des gammes de température très larges pouvant varier typiquement de -250°C à + 150°C.

Même s'ils ont montré une grande efficacité, ces stratifiés et roues flexibles présentent toutefois l'inconvénient d'être relativement complexes de fabrication et donc de prix de revient élevé, tant et si bien qu'il était souhaitable de trouver une alternative moins coûteuse et au moins aussi efficace, notamment pour des températures d'utilisation aussi larges que celles indiquées ci-dessus.

Poursuivant leurs recherches, les Demanderesses ont trouvé une roue élastique non pneumatique nouvelle répondant à un tel objectif.

### 3. BREVE DESCRIPTION DE L'INVENTION

Ainsi, la présente invention concerne une roue élastique non pneumatique, définissant trois directions perpendiculaires, circonférentielle (X), axiale (Y) et radiale (Z), comportant au moins :
- une bande annulaire dite de cisaillement orientée selon la direction circonférentielle, surmontée d'une bande de roulement ;
- un moyeu ;
- une pluralité d'éléments de support connectant le moyeu à la bande annulaire dite de cisaillement,
la bande annulaire dite de cisaillement étant constituée par un stratifié caractérisé en ce que ledit stratifié de la bande annulaire dite de cisaillement comporte au moins une couche de caoutchouc silicone disposée en sandwich entre deux couches de composite fibre-résine comportant des filaments d'une matière minérale noyés dans une résine thermodurcie.

L'invention concerne la roue ci-dessus à l'état cru comme à l'état cuit, c'est-à-dire une roue dans laquelle le caoutchouc silicone du stratifié est lui-même soit à l'état non réticulé (cru) soit à l'état réticulé (cuit).

Avantageusement, le stratifié de la roue selon l'invention, comparé aux stratifiés ci-dessus de l'art antérieur, s'est révélé en outre apporter une raideur au moins équivalente à cette bande de cisaillement tout en conférant plus de souplesse à la structure de la roue, lui permettant ainsi de mieux encaisser les chocs et absorber les obstacles.

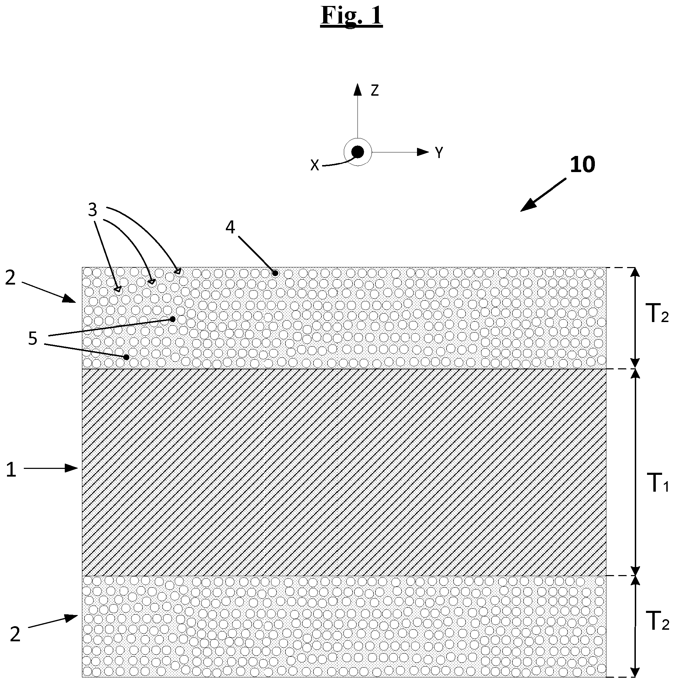

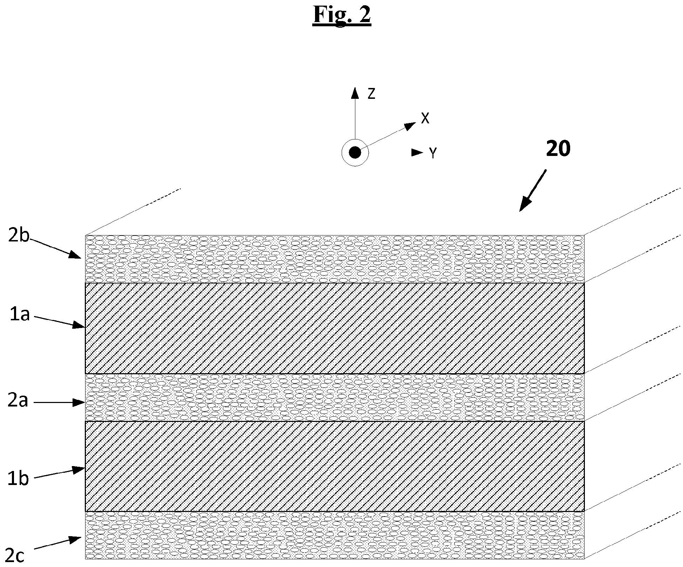

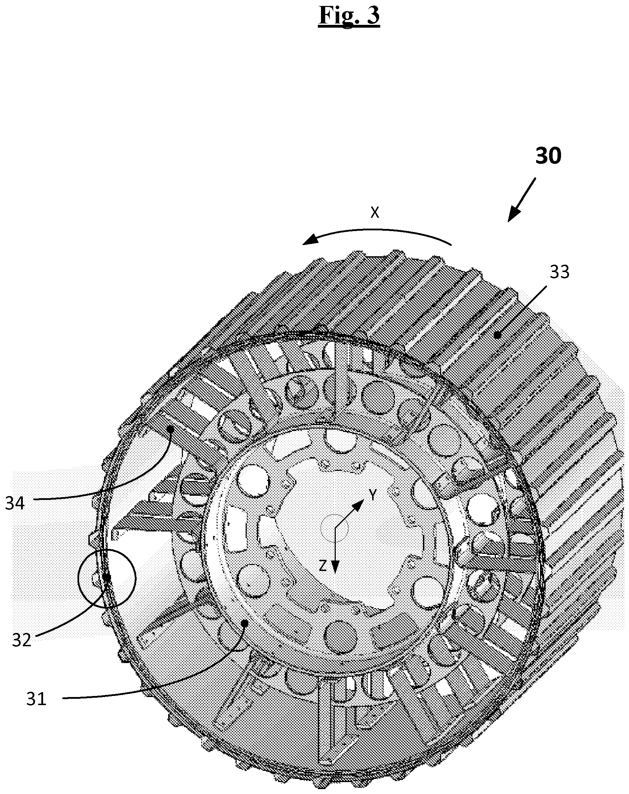

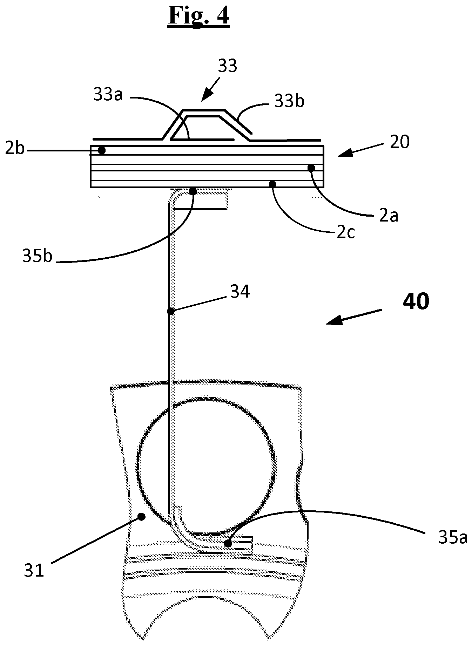

L'invention ainsi que ses avantages seront aisément compris à la lumière de la description détaillée et des exemples de réalisation qui suivent, ainsi que des figures relatives à ces exemples qui schématisent (sans respect d'une échelle spécifique) :
- en coupe transversale, un exemple de stratifié (10) destiné à la roue selon l'invention, à section droite rectangulaire, orienté selon une direction principale longitudinale X, comportant au total 3 couches, une couche (1) de caoutchouc silicone et deux couches (2) de composite fibre-résine (Fig. 1) ;
- une vue en légère perspective d'une coupe transversale d'un autre exemple de stratifié (20) destiné à la roue selon l'invention, à section droite rectangulaire, orienté selon la direction principale longitudinale X, comportant au total 5 couches, deux couches (1a, 1b) de caoutchouc silicone et trois couches (2a, 2b, 2c) de composite fibre-résine (Fig. 2);
- une vue complète en perspective d'un exemple de roue élastique non pneumatique (30) conforme à l'invention comportant un tel exemple de stratifié (20, 32) (Fig. 3) ;
- une vue en coupe radiale d'un élément unitaire (40) de la roue (30) de l'invention ci-dessus, détaillant un rayon de roue (34) et des moyens de fixation (35a, 35b) de ce rayon (34) d'une part au moyeu (31) de la roue et d'autre part au stratifié (20, 32), ce dernier étant lui-même surmonté radialement d'une bande de roulement (33) par exemple en acier inoxydable (Fig. 4).

### 4. DEFINITIONS

Dans la présente demande, sauf indication expresse différente, tous les pourcentages (%) indiqués sont des pourcentages en masse (ou en poids, de manière équivalente).

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

D'autre part, dans la présente demande, on entend par :
- "composite", en parlant d'un matériau ou objet quelconque : un matériau ou objet comportant des fibres, courtes ou continues, enrobées dans une matrice de résine ;
- "couche": une feuille ou tout autre élément d'épaisseur relativement faible par rapport à ses autres dimensions, cette couche pouvant être ou non de nature homogène ou cohésive, de forme plane ou non plane ;
- "direction axiale" en parlant d'une roue (ou bandage) : une direction qui est sensiblement parallèle à l'axe de rotation de la roue, c'est-à-dire faisant avec cette direction un angle ne s'écartant pas de plus de 10 degrés, de préférence pas de plus de 5 degrés ;
- "direction circonférentielle" en parlant d'une roue (ou bandage) : une direction qui est sensiblement perpendiculaire à la fois à la direction axiale et à un rayon de la roue (en d'autres termes, tangente à un cercle dont le centre est sur l'axe de rotation de la roue), c'est-à-dire faisant avec cette direction un angle ne s'écartant pas de plus de 10 degrés, de préférence pas de plus de 5 degrés ;
- "direction radiale" en parlant d'une roue (ou bandage) : une direction selon un rayon de la roue, c'est-à-dire une direction quelconque passant par l'axe de rotation de la roue et sensiblement perpendiculairement à cette direction, c'est-à-dire faisant avec une perpendiculaire à cette direction un angle ne s'écartant pas de plus de 10 degrés, de préférence pas de plus de 5 degrés ;
- "fibres unidirectionnelles", un ensemble de fibres essentiellement parallèles entre elles, c'est-à-dire orientées selon un même axe ;
- "non pneumatique", en parlant d'une roue ou d'un bandage : une roue ou un bandage conçu(e) pour être capable de porter une charge substantielle sans pression de gonflage, c'est-à-dire ne nécessitant pas un gaz de gonflage tel que l'air pour prendre sa forme utilisable et supporter la charge ;
- "orienté selon un axe ou une direction" en parlant d'un élément quelconque tel qu'une bande, une fibre ou autre élément de renforcement longiligne, un élément qui est orienté sensiblement parallèlement à cet axe ou cette direction, c'est-à-dire faisant avec cet axe ou cette direction un angle ne s'écartant pas de plus de 10 degrés (c'est-à-dire nul ou au plus égal à 10 degrés), de préférence pas de plus de 5 degrés ;
- "orienté perpendiculairement à un axe ou une direction" : en parlant d'un élément quelconque tel qu'une bande, une fibre ou autre élément de renforcement longiligne, un élément qui est orienté sensiblement perpendiculairement à cet axe ou cette direction, c'est-à-dire faisant avec une perpendiculaire à cet axe ou cette direction un angle ne s'écartant pas de plus de 10 degrés, de préférence pas de plus de 5 degrés ;
- "orienté radialement", en parlant d'un élément de roue (ou de bandage) : orienté sensiblement parallèlement à la direction radiale de la roue (ou du bandage), c'est-à-dire faisant avec cette direction un angle ne s'écartant pas de plus de 10 degrés, de préférence pas de plus de 5 degrés ;
- "orienté circonférentiellement", en parlant d'un élément de roue (ou de bandage) : orienté sensiblement parallèlement à la direction circonférentielle de la roue (ou du bandage), c'est-à-dire faisant avec cette direction un angle ne s'écartant pas de plus de 10 degrés, de préférence pas de plus de 5 degrés ;
- "stratifié" ou "produit stratifié", au sens de la classification internationale des brevets : tout produit comportant au moins deux couches ou strates, de forme plane ou non plane, qui sont liées, connectées entre elles ; l'expression "lié" ou "connecté" doit être interprétée de façon extensive de manière à inclure tous les moyens de liaison ou d'assemblage, par exemple par collage, clouage, rivetage, boulonnage.

### 5. DESCRIPTION DETAILLEE DE L'INVENTION

L'objet de la présente invention est donc (en référence aux figures 1 à 3 annexées) une roue élastique non pneumatique (30), définissant trois directions perpendiculaires, circonférentielle (X), axiale (Y) et radiale (Z), comportant au moins :
- un moyeu (31) ;
- une bande annulaire dite de cisaillement (32) orientée selon la direction circonférentielle X, surmontée d'une bande de roulement (33) ;
- une pluralité d'éléments de support (34) connectant le moyeu (31) à la bande annulaire **dite** de cisaillement (32),
la bande annulaire **dite** de cisaillement (32) **étant** constituée par un stratifié (10 ; 20) **caractérisé en ce que ledit stratifié** (10 ; 20) **de la bande annulaire dite de cisaillement (32) comporte** au moins une couche (1 ; 1a, 1b) de caoutchouc silicone disposée en sandwich entre deux couches (2 ; 2a, 2b, 2c) de composite fibre-résine comportant des filaments (3) d'une matière minérale (4) noyés dans une résine thermodurcie (5).

La figure 1 illustre de manière très simple et schématique un exemple de stratifié (10) destiné à la roue selon l'invention, définissant au moins trois directions principales perpendiculaires, une direction (X) longitudinale (c'est-à-dire dans le sens de la longueur) ou dite circonférentielle lorsque le stratifié est considéré intégré à la roue de l'invention, une direction (Y) transversale (c'est-à-dire dans le sens de la largeur) ou dite axiale lorsque le stratifié est considéré intégré à la roue de l'invention, et enfin une direction dite radiale (Z) dans le sens de l'épaisseur ou d'un rayon de roue lorsque le stratifié est considéré intégré à la roue de l'invention, ledit stratifié comportant au moins :
- une couche (1) de caoutchouc (synonyme élastomère) silicone,
- ladite couche de caoutchouc silicone (1) étant disposée en sandwich entre deux couches (2) de composite fibre-résine comportant des filaments (3) d'une matière minérale (4) noyés dans une résine thermodurcie (5).

Ces (au moins) 3 couches ou bandes sont donc bien entendu orientées toutes trois selon la même direction principale (X) du stratifié (10) objet de l'invention.

Dans le stratifié ci-dessus apte à remplir, incorporé à la roue non pneumatique de l'invention, la fonction de bande de cisaillement décrite en introduction du présent mémoire, on comprendra aisément que **l'au moins une** couche de caoutchouc silicone remplit la fonction de couche de cisaillement tandis que les deux couches de composite fibre-résine jouent le rôle de membranes (appelées parfois « semelles » par l'homme du métier dans le domaine des stratifiés composite).

Lorsque plusieurs couches (et non une seule) de caoutchouc silicone sont présentes dans le stratifié de l'invention, la caractéristique essentielle première de l'invention est bien qu'au moins une de ces couches est disposée en sandwich entre deux couches de composite fibre-résine. Selon les modes de réalisation particuliers de l'invention, les autres couches de caoutchouc silicone pourront être au contact (adhésif ou non) d'une ou plusieurs autre(s) couche(s) du composite fibre-résine, ou au contact (adhésif ou non) d'une toute autre matière, par exemple d'un métal ou d'un polymère autre que ceux précédemment décrits.

Selon un mode de réalisation préférentiel de l'invention, l'au moins une couche de silicone (1) a une épaisseur notée T₁ qui est supérieure à l'épaisseur notée T₂ de chaque couche (2) de composite fibre-résine, T₁ étant de préférence comprise entre 1,5 et 3 fois T₂. Toutes ces épaisseurs sont bien entendu mesurées selon la direction Z.

Plus préférentiellement, cette épaisseur notée T₁ est comprise entre 1 et 3 mm, en particulier entre 1,5 et 2,5 mm.

Selon un autre mode de réalisation préférentiel de l'invention, chaque couche de composite fibre-résine a une épaisseur notée T₂ comprise entre 0,25 et 2 mm, de préférence entre 0,5 et 1,5 mm.

Selon un mode de réalisation particulier de l'invention, le stratifié de l'invention comporte au moins deux (c'est-à-dire deux ou plus de deux) couches (1a, 1b) de caoutchouc silicone et au moins trois (c'est-à-dire trois ou plus de trois) couches (2a, 2b, 2c) de composite fibre-résine, comme illustré par exemple à la figure 2 qui sera commentée ultérieurement.

Les couches (2 ; 2a, 2b, 2c) de composite peuvent avoir la même épaisseur notée T₂ d'une couche à l'autre, ou une épaisseur différente. De même, les couches (1 ; 1a, 1b) de caoutchouc silicone, si elles sont plusieurs, peuvent avoir la même épaisseur notée T₁ d'une couche à l'autre, ou une épaisseur différente.

Préférentiellement, la (ou les) couche(s) de caoutchouc silicone (1 ; 1a, 1b) et les couches de composite fibre-résine (2 ; 2a, 2b, 2c) sont liées entre elles par au moins un primaire d'adhésion. Ce primaire d'adhésion est préférentiellement à base d'un organosilane ou d'un organopolysiloxane.

Par « caoutchouc silicone », on comprend dans la présente demande un (on entend un seul ou plusieurs) élastomère silicone en tant que tel (utilisé seul) ainsi que, de manière préférentielle, une composition de caoutchouc à base d'un tel élastomère silicone et d'au moins un additif tel que par exemple un système de réticulation au peroxyde ou un catalyseur au platine, cet élastomère ou cette composition pouvant être à l'état non réticulé (cru) ou bien réticulé (cuit).

Par l'expression composition "à base de", il faut entendre de manière connue une composition comportant le mélange et/ou le produit de réaction des différents constituants utilisés, certains de ces constituants de base étant susceptibles de, ou destinés à, réagir entre eux, au moins en partie, lors des différentes phases de fabrication du stratifié de l'invention, en particulier au cours de sa réticulation ou vulcanisation.

On rappellera ici qu'un élastomère silicone (ou de manière équivalente élastomère polysiloxane) est un élastomère issu au moins en partie (i.e., un homopolymère ou un copolymère) de monomères siloxanes (monomères de formule générale R₂SiO). Ainsi, les élastomères silicone comprennent les éléments silicium, oxygène et des groupes, par exemple organiques, rattachés au silicium. Les groupes organiques R peuvent, de manière connue, être des groupes tels que des atomes d'hydrogène, des halogènes, des groupes alkoxy, des groupes alkyle (notamment méthyle) ou aryle (notamment phényle).

La nomenclature classifie les élastomères ou caoutchoucs silicone (ou encore silicones élastomériques) selon leurs conditions de cuisson. Ils sont divisés en deux catégories : les élastomères vulcanisables à froid (en français « EVF » ou en anglais « RTV » pour *Room Temperature Vulcanising*) et les élastomères vulcanisables à chaud (en français « EVC » ou en anglais « HTV » pour *High Temperature Vulcanising*)*.* Les « RTV » ont la capacité de réticuler à température ambiante (c'est-à-dire à une température comprise entre 5°C et 35°C) et les « HTV » réticulent à des températures supérieures à 80°C (et notamment à une température comprise entre 100°C et 230°C).

Ces définitions étant données, le caoutchouc silicone utilisé dans le stratifié est de préférence un caoutchouc silicone du type HTV.

Au sein de cette classe HTV, les silicones se distinguent également par leur viscosité ou leur masse moléculaire donnée en nombre d'unités monomériques de SiO₂, comme indiqué par exemple dans le tableau 18 page 25 de l'ouvrage « Silicone Elastomers » de P. Jerschow, Report 137, Volume 12, Number 5, 2001 (ISBN: 1-85957-297-9).

Les silicones élastomériques à haute viscosité dites « HCR » (en anglais *High Consistency Rubber*), selon cette dernière référence, ont généralement une viscosité supérieure à 20 000 Pas ce qui correspond selon l'auteur à une masse moléculaire supérieure à 6 000 motifs SiO₂. Les silicones élastomériques liquides dites « LR » (en anglais *Liquid Rubber*) ou « LSR » (en anglais *Liquid Silicone Rubber*), selon cette même référence, ont généralement une viscosité inférieure à 100 Pas ce qui correspond à une masse moléculaire inférieure à 1000 motifs SiO₂.

Pour résumer, le caoutchouc silicone utilisé dans le stratifié de la roue de l'invention est donc préférentiellement du type HTV (vulcanisable à chaud), et plus préférentiellement, parmi les silicones HTV, un caoutchouc silicone HCR (à haute viscosité).

De tels caoutchoucs silicone sont bien connus, leurs domaines d'application sont très variés, par exemple la câblerie, l'alimentaire, le médical, l'aéronautique et l'aérospatiale. A titre de produits disponibles commercialement, on peut citer par exemple pour le groupe des HCR : « ELASTOSIL R » avec par exemple « Elastosil R 701-60 » ou « Elastosil R 701-80 » de la société WACKER ; « BLUESIL », « SILBIONE », « RHODORSIL » avec par exemple « Rhodorsil MF660U » ou « Rhodorsil MM 60 THT » de la société BLUESTAR; « SILASTIC » de la société DOW CORNING ; « TUFEL », « Addisil », « Silplus » de la société MOMENTIVE.

D'autre part, le caoutchouc silicone utilisé est de préférence de grade (ou qualité « Q ») : « MQ », « FMQ », « PMQ », « VMQ », « PVMQ » ou « FVMQ », selon une classification bien connue de l'homme du métier (voir notamment norme ASTM D1418). Dans une telle classification, pour rappel, M désigne le groupement méthyle, F désigne le groupement trifluoropropyle, P désigne le groupement phényle et V désigne le groupement vinyle. PVMQ par exemple désigne des caoutchoucs silicone comportant des groupes phényle, vinyle et méthyle.

Plus préférentiellement, le caoutchouc silicone utilisé est de grade VMQ ou PVMQ, tout particulièrement PVMQ. A titre de produit disponible commercialement, on peut citer par exemple pour le grade PVMQ le caoutchouc silicone « KE-183-U » de la société ShinEtsu résistant à basse température, réticulable au peroxyde.

La composition de caoutchouc silicone peut comporter un seul élastomère silicone ou un mélange de plusieurs élastomères silicone, le ou les élastomères silicone pouvant être utilisés optionnellement en association avec un autre type d'élastomère.

Toutefois, de préférence, la composition de caoutchouc silicone du stratifié comporte plus de 50 pce, plus préférentiellement plus de 80 pce d'élastomère silicone, le reste d'élastomère (par conséquent de préférence moins de 50 pce, encore plus préférentiellement moins de 20 pce) pouvant être constitué optionnellement d'un autre type d'élastomère. Selon un mode de réalisation particulièrement préférentiel, l'élastomère silicone constitue le seul élastomère présent dans cette composition, c'est-à-dire que son taux est égal à 100 pce.

Par l'expression « partie en poids pour cent parties en poids d'élastomère » (ou pce), il faut entendre au sens de la présente invention, la part en masse pour cent parties d'élastomère, quelle que soit la nature de l'élastomère.

Préférentiellement, la composition de caoutchouc silicone du stratifié comporte un système de réticulation de l'élastomère silicone, choisi plus préférentiellement dans le groupe constitué par les peroxydes organiques et leurs mélanges.

Par exemple et de manière non limitative, les peroxydes organiques peuvent être choisis dans le groupe des peroxydes suivants : bis (2,4-di-chlorobenzoyl) peroxide ou DCBP-50 (« Perkadox PD-50S-ps-a » de la société AKZO Nobel Chemical B.V. ou « Luperox CST » de la société ARKEMA, benzoyl peroxide ou BP-50 (« Perkadox L-50S-ps » de la société AKZO Nobel Chemical B.V.), dicumyl peroxide (« Di-Cup 40C » de la société Geo Specialty Chemicals, Inc. ou « Varox DCP-40C » de la société R.T. Vanderbilt Company, Inc.), 2,5-dimethyl-2,5-di(t-butylperoxy)hexane ou DBPH (« Varox DBPH-50 » de la société R.T. Vanderbilt Company, Inc. ou « Luperox 101 » de la société ARKEMA ou « Trigonox 101 » de la société AKZO Nobel Chemical B.V. Le système de réticulation est encore plus particulièrement choisi parmi les peroxydes organiques et plus préférentiellement le 2,5-dimethyl-2,5-di(t-butylperoxy)hexane ou DBPH.

La composition de caoutchouc silicone peut également comporter d'autres additifs optionnels. Un tel additif peut être par exemple une charge, en particulier du type silice ; à titre d'exemples particuliers, on peut utiliser une silice de pyrogénation ou une silice de précipitation. A titres d'autres additifs possibles, on peut citer aussi noir de carbone, oxyde de zinc, agents colorants, agents de protection tels que antiozonants ou antioxydants.

Les caoutchoucs silicone utilisés conformément à l'invention peuvent contenir des inhibiteurs de la réaction de réticulation, par exemple les inhibiteurs du catalyseur au platine, tels que par exemple des amines organiques, silazanes, oximes organiques, diesters de diacide carboxylique, alcools acétyléniques, cétones acétyléniques, vinylméthyl-cyclopolysiloxanes (voir par exemple US3445420 et US528966). L'inhibiteur est utilisé par exemple à raison de 0,005 à 5 pce, de préférence de 0,01 à 3 pce.

De préférence, la composition de caoutchouc silicone présente après réticulation un module sécant apparent en extension à 10% d'allongement, noté MSA10, qui est inférieur à 5 MPa, plus préférentiellement compris entre 1 et 5 MPa, en particulier entre 1 et 3 MPa. Son allongement à la rupture en traction, noté At, est de préférence supérieur à 350%, plus préférentiellement supérieur à 400%, en particulier supérieur à 450%. Sauf indication différente, ces propriétés mécaniques sont mesurées selon la norme NF-T-46-002 (septembre 1988). Toutes ces mesures de traction sont effectuées dans les conditions normales de température (23 ± 2°C) et d'hygrométrie (50 ± 5% d'humidité relative), selon la norme française NF-T-40-101 (décembre 1979).

Par matériau composite fibre-résine, on entend de manière connue un matériau comportant des fibres noyées (ou enrobées, les deux étant considérés comme synonymes) dans une matrice de résine.

Les fibres du stratifié de la roue de l'invention peuvent être des fibres continues ou des fibres courtes ; on préfère utiliser des fibres continues. Pour une meilleure résistance des couches, ces fibres sont de préférence sensiblement unidirectionnelles et orientées selon la direction principale X. Dans cette direction X, les couches de composite verre-résine présentent un module en extension (ASTM D 638) qui est de préférence supérieur à 15 GPa, plus préférentiellement supérieur à 30 GPa (par exemple entre 30 et 50 GPa).

On utilise de préférence des fibres multifilamentaires, c'est-à-dire constituées chacune de plusieurs filaments unitaires de faible diamètre élémentaire, mais on pourrait également utiliser des fibres monofilamentaires c'est-à-dire constituées chacune d'un monofilament unitaire comparativement de plus gros diamètre.

Plus préférentiellement, les filaments élémentaires de ces fibres sont inclinés, par rapport à l'axe de fibre et donc à la direction principale X, d'un angle alpha qui est inférieur ou égal à 45 degrés, plus préférentiellement inférieur ou égal à 15 degrés ; encore plus préférentiellement, les filaments de matière minérale sont eux-mêmes orientés selon l'axe principal X du stratifié (angle alpha nul).

Dans le stratifié de la roue de l'invention, les couches de composite fibre-résine peuvent être constitués d'un seul empilement filamentaire ou de plusieurs empilements filamentaires élémentaires superposés dont les fibres sont préférentiellement toutes orientées selon la direction principale X. Dans cette structure multi-empilement peuvent être intercalés un ou plusieurs autres empilements additionnels de fils croisés, ceci afin de renforcer la structure latéralement et ainsi, selon un terme consacré dans le métier des composites, équilibrer la structure d'ensemble.

Typiquement, les filaments de matière minérale (3) sont donc présents sous la forme de fibres multifilamentaires (de préférence essentiellement unidirectionnelles), chaque fibre multifilamentaire pouvant comporter plusieurs dizaines, centaines voire milliers de filaments unitaires. Ces filaments unitaires très fins ont généralement et de préférence, en particulier lorsqu'ils sont en verre, un diamètre moyen de l'ordre de 5 à 30 µm, plus préférentiellement de 10 à 20 µm.

De préférence, les fibres multifilamentaires minérales sont choisies parmi les fibres de verre, les fibres de carbone, les fibres de bore, les fibres céramiques (englobant les fibres d'oxyde telles que fibres de silice ou d'alumine, et les fibres de non oxyde telles que fibres de carbure de silicium), et les mélanges de telles fibres.

En d'autres termes, la matière minérale (4) constitutive des filaments des monobrins est choisie préférentiellement parmi verre, carbone, bore et céramique ; plus préférentiellement, la matière minérale est du verre.

Par « résine » (5), on entend dans la présente demande toute résine synthétique du type thermodurcissable (encore dite durcissable, polymérisable ou réticulable) en tant que telle (utilisée seule) et par extension toute composition, formulation à base de cette résine et comportant en outre un ou plusieurs additifs, tel que par exemple un agent durcissant. Par résine « thermodurcie » ou « réticulée », on entend bien entendu que la résine est durcie (photodurcie et/ou thermodurcie), en d'autres termes qu'elle se présente sous la forme d'un réseau de liaisons tridimensionnelles, dans un état propre aux polymères dits thermodurcissables (par opposition aux polymères dits thermoplastiques).

La résine de départ utilisée ici est donc par définition une résine réticulable (durcissable) susceptible d'être réticulée, durcie par toute méthode connue, par exemple par un rayonnement UV (ou UV-visible), de préférence émettant dans un spectre allant au moins de 300 nm à 450 nm.

A titre de résine réticulable, on utilise de préférence une résine polyester ou vinylester. Par résine "polyester", on entend de manière connue une résine du type polyester insaturé. On utilise plus préférentiellement une résine vinylester.

Les résines vinylester sont bien connues dans le domaine des matériaux composites. On a constaté qu'une résine vinylester résistait mieux que les autres à des températures extrêmement basses. Un test simple permet de mesurer que la résistance à la flexion d'un composite (fibre de verre/ résine vinylester) est sensiblement augmentée à très basse température. Ce test consiste à faire une boucle avec un élément composite (par exemple, un ruban ou monofilament d'épaisseur ou diamètre 1 mm) et d'en diminuer le rayon de courbure jusqu'à rupture (bien visible à l'œil nu) de la partie extérieure du ruban ou mono filament qui est en extension. On s'aperçoit alors, de manière inattendue, que le rayon minimum atteint devient plus petit lorsque la boucle du ruban ou monofilament a été plongée juste avant dans l'azote liquide (- 196°C). Au test d'immersion ou trempe thermique dans l'azote liquide, on pourra également tester la résine en tant que telle, en privilégiant les résines qui ne fissurent pas lors d'un tel test.

Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

Une résine époxyvinylester à base novolaque (partie entre crochets dans la formule I ci-dessous) répond par exemple, de manière connue, à la formule (I) qui suit :

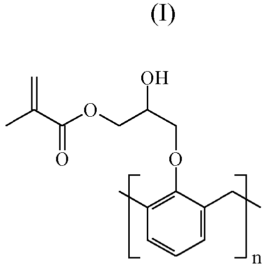

Une résine époxyvinylester à base bisphénolique A (partie entre crochets de la formule (II) ci-dessous) répond par exemple à la formule (le "A" rappelant que le produit est fabriqué à l'aide d'acétone):

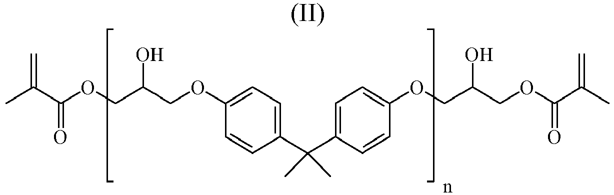

Une résine époxyvinylester de type novolaque et bisphénolique a montré d'excellents résultats. A titre d'exemple d'une telle résine, on peut citer notamment les résines vinylester « ATLAC 590 » et « E-Nova FW 2045 » de la société DSM (diluées avec environ 40% de styrène). Des résines époxyvinylester sont disponibles auprès d'autres fabricants tels que par exemple AOC (USA - résines « VIPEL »).

De préférence, dans le stratifié de la roue de l'invention, le module initial en extension de la résine thermodurcie, mesuré à 20°C, est supérieur à 3,0 GPa, plus préférentiellement supérieur à 3,5 GPa.

La résine (composition de résine) d'imprégnation comporte de préférence un photo-initiateur sensible (réactif) aux UV au-delà de 300 nm, de préférence entre 300 et 450 nm. Ce photo-initiateur est utilisé à un taux préférentiel de 0,5 à 3%, plus préférentiellement de 1 à 2,5%. Elle peut également comporter un agent de réticulation, par exemple à un taux compris entre 5% et 15% (% en poids de composition d'imprégnation).

De préférence, ce photo-initiateur est de la famille des composés phosphine, plus préférentiellement un oxyde de bis(acyl)phosphine comme par exemple l'oxyde de bis-(2,4,6-triméthylbenzoyl)-phénylphosphine ("Irgacure 819" de la société BASF) ou un oxyde de mono(acyl)phosphine (par exemple "Esacure TPO" de la société Lamberti), de tels composés phosphine pouvant être utilisés en mélange avec d'autres photo-initiateurs, par exemple des photo-initiateurs de type alpha-hydroxy-cétone tels que par exemple la diméthylhydroxy-acétophénone (e.g. « Esacure KL200 » de Lamberti) ou la 1-hydroxy-cyclohexyl-phényl-cétone (e.g. « Esacure KS300 » de Lamberti), des benzophénones telles que la 2,4,6-triméthylbenzophénone (e.g. « Esacure TZT » de Lamberti) et/ou des dérivés de thioxanthones comme par exemple l'isopropylthioxanthone (e.g. « Esacure ITX » de Lamberti).

La température de transition vitreuse notée Tg₂ de la résine thermodurcie est de préférence supérieure à 30°C, plus préférentiellement supérieure à 70°C.

Tg₁ et Tg₂ sont mesurées de manière connue par DSC (*Differential Scanning Calorimetry*), au second passage, par exemple et sauf indication différente spécifiée dans la présente demande, selon la norme ASTM D3418 de 1999 (appareil DSC "822-2" de Mettler Toledo ; atmosphère azote ; échantillons préalablement portés de la température ambiante (20°C) à 250°C (10°C/min), puis refroidis rapidement (trempe) jusqu'à une température de préférence inférieure d'au moins 50°C à la température Tg considérée (par exemple jusqu'à 20°C), avant enregistrement final de la courbe de DSC de cette température de trempe (par exemple 20°C) jusqu'à 250°C, selon une rampe de 10°C/min).

A titre d'exemple préférentiel, des composites verre-résine pouvant servir à la fabrication du stratifié de la roue de l'invention sont bien connus de l'homme du métier. Ils peuvent être préparés selon des procédés connus comportant de préférence au moins les étapes suivantes :
- réaliser un arrangement rectiligne de fibres (filaments) de verre et entraîner cet arrangement dans une direction d'avancement :
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par une résine ou composition de résine thermodurcissable, à l'état liquide, pour obtenir un imprégné contenant les filaments de verre et la résine ;
- faire passer ledit imprégné au travers d'une filière de calibrage ayant une section de surface et de forme prédéfinies, pour lui imposer une forme de bande (de préférence de section droite rectangulaire) ;
- enrouler la bande de composite verre-résine ainsi obtenue sur une forme ou un moule ;
- dans une chambre d'irradiation UV, polymériser la résine sous l'action des UV.

Toutes les étapes ci-dessus (arrangement, dégazage, imprégnation, calibrage, polymérisation, enroulage et cuisson finale) sont des étapes largement connues de l'homme du métier, ainsi que les matières (fibres multifilamentaires et compositions de résine) utilisées ; elles ont par exemple été décrites dans les demandes EP 1 174 250 ou WO 2007/085414.

On rappellera notamment qu'avant toute imprégnation des fibres, est conduite préférentiellement une étape de dégazage de l'arrangement de fibres par l'action du vide, afin notamment de renforcer l'efficacité de l'imprégnation ultérieure et surtout de garantir l'absence de bulles à l'intérieur du composite final.

Après traversée de la chambre à vide, les filaments de verre entrent dans une chambre d'imprégnation qui est totalement pleine de résine d'imprégnation, donc dépourvue d'air : c'est en ce sens qu'on peut qualifier cette étape d'imprégnation d'« imprégnation sous vide ».

La filière dite de calibrage permet, grâce à une section droite de dimensions déterminées, généralement et de préférence rectangulaire, d'ajuster la proportion de résine par rapport aux fibres de verre tout en imposant à l'imprégné la forme et l'épaisseur visées pour le composite final.

La chambre de polymérisation ou d'irradiation UV a ensuite pour fonction de polymériser, réticuler la résine sous l'action des UV. Elle comporte un ou de préférence plusieurs irradiateurs UV, constitué(s) par exemple chacun par une lampe UV de longueur d'onde de 200 à 600 nm.

Après l'étape de polymérisation finale aux UV, on obtient finalement une couche (2) de composite fibre-résine terminée de fabrication telle que schématisée sur la figure 1, de très grande longueur relativement à sa section, dont les filaments (3) de verre (4) unitaires sont répartis de manière homogène dans tout le volume de résine durcie (5).

Préférentiellement, dans le stratifié, chaque couche de composite fibre-résine est pourvue d'une couche adhésive au regard de chaque couche de caoutchouc silicone avec laquelle elle est au contact.

Pour faire adhérer la résine thermodurcie du composite verre-résine au caoutchouc silicone, on pourra utiliser tout système adhésif approprié. Comme déjà indiqué supra, on utilise de préférence un primaire d'adhésion déposé préalablement sur le composite verre-résine, plus préférentiellement à base d'un organosilane ou d'un organopolysiloxane.

L'homme du métier comprendra aisément que la connexion entre les deux types de couches, dans le stratifié multicouche, est assurée définitivement lors de la cuisson (réticulation) finale de la roue non pneumatique auquel se destine ce stratifié.

Le stratifié peut être fabriqué de manière tout à fait conventionnelle pour un homme du métier des bandages ou roues (pneumatiques ou non pneumatiques), par simple extrusion ou calandrage (entre outils à cylindres) d'au moins une couche (ou *« skim »*) de caoutchouc silicone à l'état cru, entre au moins deux couches de composite fibre-résine déjà réticulé (c'est-à-dire avec sa résine thermodurcie).

La cuisson a lieu typiquement dans un moule sous pression, par exemple entre 3 et 10 bars et à une température comprise entre 150°C et 200°C, pendant plusieurs minutes (par exemple 10 min à 160°C selon la nature du catalyseur utilisé). Puis est opérée une post-vulcanisation (par exemple 4 h à 200°C) en étuve, pour réticulation complète de la composition de caoutchouc silicone.

### 6. EXEMPLES DE REALISATION DE L'INVENTION

Le stratifié de la roue de l'invention précédemment décrit est un produit composite constitué de matériaux élastiques pouvant conserver leurs propriétés dans une très large gamme de températures.

Les bandages ou roues non pneumatiques de l'invention sont destinés à tous types de véhicules automobiles, terrestres ou non terrestres, en particulier à des véhicules destinés à affronter des conditions de roulage sévères ou agressives, sous tout type de température après un ajustement approprié de la température de transition vitreuse (Tg₁) du caoutchouc silicone, en particulier sous des températures extrêmes telles que celles que pourraient rencontrer par exemple des véhicules lunaires, des engins de transport routier, des véhicules hors-la-route tels qu'engins agricoles ou de génie civil, ou tout autre type de véhicules de transport ou de manutention pour lequel l'utilisation d'un matériau élastomérique diénique tel que du caoutchouc naturel n'est pas possible ou n'est pas souhaitée.

La roue de l'invention sera par exemple avantageusement utilisable à haute température, typiquement comprise entre 20°C et 200°C, tant pour des applications terrestres (par exemple travail dans les mines) que non terrestres (par exemple sur la Lune).

Elle a été notamment conçue pour une utilisation à basse température, typiquement comprise entre -100°C et 20°C, telle qu'on peut la rencontrer par exemple sur la planète Mars. Préférentiellement, on utilise dans ce cas un caoutchouc silicone de grade VMQ ou PVMQ, plus préférentiellement du type PVMQ.

Ainsi, selon un mode de réalisation particulier et préférentiel de l'invention, le caoutchouc silicone présente une température de transition vitreuse notée Tg₁ qui est inférieure à -100°C, de préférence inférieure à -110°C. Préférentiellement, le caoutchouc silicone présente un module MSA10, mesuré à -100°C, qui est inférieur à 30 MPa (en particulier compris entre 5 et 30 MPa), plus préférentiellement inférieur à 20 MPa (en particulier compris entre 5 et 20 MPa), plus particulièrement encore inférieur à 10 MPa (notamment entre 5 et 10 MPa). Son allongement At mesuré à -100°C est de préférence supérieur à 100%, plus préférentiellement supérieur à 150%.

A titre d'exemple, la figure 3 représente une vue complète en perspective d'un exemple de roue élastique non pneumatique (30) conforme à l'invention, supportée structurellement (i.e., grâce à une structure porteuse), dont la bande de cisaillement circonférentielle est constituée par un stratifié tel que précédemment décrit.

Cette roue non pneumatique (30), définissant trois directions perpendiculaires, circonférentielle (X), axiale (Y) et radiale (Z), comporte donc au moins :
- un moyeu (31), par exemple métallique ;
- une bande annulaire **dite** de cisaillement (32) orientée selon la direction circonférentielle X, surmontée d'une bande de roulement (33) ;
- une pluralité d'éléments de support (34) connectant le moyeu (31) à la bande annulaire dite de cisaillement (32).

La bande annulaire dite de cisaillement (32) est constituée du stratifié (10, 20) précédemment décrit, comportant au moins une (c'est-à-dire une ou plusieurs) couche de caoutchouc silicone disposée en sandwich entre deux couches de composite fibre-résine comportant des filaments d'une matière minérale noyés dans une résine thermodurcie.

Les éléments de support (34) ou « rayons de roue », à faible rigidité de compression, travaillent en tension pour transmettre les efforts entre la bande de cisaillement annulaire (32) et le moyeu (31) de la roue, comme décrit par exemple dans le brevet US 7 201 194 précité (voir par exemple fig. 7 à fig. 11). L'épaisseur des rayons (34) est fine relativement à celle des différentes couches du stratifié formant la bande de cisaillement (32), elle est préférentiellement inférieure à 0,5 mm, plus préférentiellement encore inférieure à 0,3 mm.

Pour rappel, grâce à la présence de tels rayons, on favorise une pression de contact au sol uniformément répartie, d'où un meilleur travail de la roue ; on évite ainsi des points localisés de haute pression et les risques d'enlisement ou d'ensablement qui peuvent aller avec sur des sols instables.

Ces rayons de roue (34) peuvent être en matériaux aussi divers que métal (ou alliage métallique), polymères ou encore matériaux hybrides, renforcés ou non. A titre d'exemples, on peut citer des polymères tels que des polyuréthanes, des matériaux composites comportant des fibres, notamment de verre et/ou de carbone, imprégnées ou non par une résine. Le module en extension des matériaux utilisés est adapté bien entendu à la charge qui sera supportée par chaque rayon de roue. En réglant la capacité d'allongement élastique des rayons de roue (ou celle des matériaux les constituant), on peut générer une contre-flèche plus ou moins importante et ainsi ajuster l'empreinte au sol de la roue. Ainsi, préférentiellement, on utilise des rayons de roue présentant un allongement élastique sous traction de quelques %, typiquement de 1 à 5%.

Selon un mode de réalisation préférentiel, notamment pour une utilisation de la roue (30) de l'invention à une très basse température, on peut utiliser des rayons de roue qui sont eux-mêmes en matériau composite, comme par exemple un tissu de fibres de verre imprégné PTFE (polytétrafluoroéthylène), des couches de fibres de verre continues, unidirectionnelles, noyées dans une matrice de résine vinylester, ou encore un tissu de fibres polyester.

On voit sur cette figure 3 que, conformément à un mode de réalisation préférentiel, les rayons de roue (34) sont orientés dans une direction radiale Z ; ils pourraient entre également agencés dans une direction autre que radiale, par exemple disposés en zig-zag autour du moyeu 31.

A titre d'exemple, sur la figure 3, le produit stratifié de la roue de l'invention comporte 2 couches de caoutchouc silicone chacune disposée en sandwich entre 2 couches de composite [fibre (verre) / résine (vinylester)], comme illustré précédemment à la figure 2.

On voit sur cette figure 3 que le stratifié constituant la bande annulaire **dite** de cisaillement (32) de la roue de l'invention, peu visible sur cette vue, est très fin (épaisseur radiale égale par exemple à 7 ou 8 mm, mesurée selon Z) par rapport au diamètre total de la roue (par exemple égale à 400 mm).

Une représentation plus détaillée est donnée sur la figure 4 représentant une vue en coupe radiale d'un élément unitaire (40) de la roue (30) ci-dessus, détaillant un rayon de roue (34) et des moyens de fixation (35) de ce rayon (34) d'une part au moyeu (31) de la roue (30) et d'autre part au stratifié (20).

Ce dernier, plus exactement sa couche de composite verre-résine la plus externe radialement (par exemple référencée 2b sur la figure 2) est surmontée radialement de la bande de roulement (33) destinée à entrer au contact avec le sol.

Cette bande de roulement (33) peut être constituée de matériaux aussi divers que métal (ou alliages métalliques), polymères ou encore matériaux hybrides métal-polymère. A titre d'exemples de polymères, on peut citer par exemple des polyesters tels que PET, du PTFE, de la cellulose telle que de la rayonne, des caoutchoucs tels que des polyuréthanes.

Selon un mode de réalisation préférentiel, la bande de roulement se présente sous la forme d'un tissu tridimensionnel, notamment dans les matériaux précités, dont l'épaisseur est par exemple comprise entre 5 et 20 mm. Selon un autre mode de réalisation préférentiel, le cuir utilisé comme bande de roulement, notamment selon une épaisseur de quelques mm (par exemple 3 à 4 mm), s'est révélé particulièrement performant à très basse température.

Pour une utilisation à très basse température, on préfère plus particulièrement une bande de roulement en métal, par exemple en acier inox, comme illustré par exemple aux figures 3 et 4, ayant par exemple une épaisseur de l'ordre de 1 mm ou moins de telle manière que l'épaisseur totale de l'ensemble bande de cisaillement plus bande de roulement soit préférentiellement au plus égale à 10 mm.

Cette bande de roulement (33) peut être fixée à la bande de cisaillement (32) de la roue (30) par divers moyens de fixation, par exemple par rivetage, collage ou boulonnage. Selon un autre mode de réalisation possible, elle pourrait être assemblée directement sur le stratifié (10, 20) lors de la fabrication de ce dernier.

Avantageusement, la bande de roulement (33) peut être constituée d'une suite d'éléments métalliques (par exemple en acier inox) « emboîtés » les uns dans les autres, comme illustré par exemple en détail à la figure 4. On voit sur cette figure 4 que la bande de roulement 33 est constituée d'éléments discrets dont l'extrémité est en forme de trapèze, l'extrémité d'un élément interne (33a) formant un trapèze fermé, l'extrémité d'un élément externe (33b) formant un trapèze ouvert recouvrant l'autre extrémité en forme de trapèze fermé, de manière à protéger la bande de cisaillement (stratifié) et ses moyens de fixation (par exemple rivet) d'une agression externe lors du roulage, mais aussi constituer une sculpture (relief) pour la bande de roulement apte à favoriser la traction de la roue sur le sol.

Dans cet exemple de roue (30) selon l'invention et de stratifié (20), chaque couche (2a, 2b, 2c) de composite verre-résine, d'épaisseur égale à environ 1 mm, est constituée par exemple de deux fois trois empilements de fibres continues de verre ("Advantex" de la société Owens Corning ; titre 1200 tex), dégazées et imprégnées par une résine vinylester ("Atlac 590" de la société DSM + photo-initiateur "Irgacure 819" de la société Ciba) entre lesquelles on a ajouté un tissu tramé en fibre de verre (verre "E" ; grammage 125 g/m²), imprégné par une résine vinylester, pour équilibrage de l'ensemble composite. La couche finale a été obtenue par enroulement filamentaire (ruban issu d'une buse de 0,2 x 5 mm) à un angle voisin de zéro degré. Après enroulement (pas de pose de 5 mm) de trois empilements élémentaires, on a stoppé l'enroulement puis déposé sur le troisième empilement le tissu tramé imprégné de résine, avant d'enrouler les trois derniers empilements de ruban par-dessus le tissu tramé ainsi intercalé. Puis on a polymérisé l'ensemble sous UV, sur le support d'enroulement. Selon un autre mode de fabrication, on peut par exemple enrouler en continu comme suit : on dépose successivement un empilement à 0°, puis un empilement à -5°, un empilement à +5°, un empilement à 0°, un empilement à +5° ; un empilement à -5° ; et on termine par un empilement à 0°, le tout en continu. Les empilements à +5° et -5° donnent suffisamment de cohésion latérale ; l'épaisseur finale est toujours la même. Ainsi préparée, chaque couche de composite verre-résine a par exemple, dans la direction de ses fibres de renforcement, un module en traction de l'ordre de 45 GPa. Pour toutes les couches de composite ci-dessus décrites, le contenu en fibres est par exemple d'environ 70% (soit environ 30% en poids de résine).

Dans cet exemple de roue (30) selon l'invention et de stratifié (20), chaque couche de composition de caoutchouc silicone est constituée par exemple par un caoutchouc silicone de grade PVMQ résistant aux basses températures, par exemple le produit «KE-183-U» commercialisé par la société Shin Etsu, réticulable au peroxyde.

Les structures (rayons de roue d'une part, bande de roulement d'autre part) destinées à être liées au stratifié peuvent être connectées directement aux couches (par exemple 2b et 2c sur la figure 2) de composite fibre-résine grâce à des moyens de fixation appropriés déjà décrits, ou bien connectées indirectement au moyen de pièces d'assemblage intermédiaires, notamment grâce à des inserts en métal, en matière plastique ou en matériau composite, ayant également pour fonction de renforcer les points d'assemblage.

Les inserts (35a, 35b) assemblant les rayons de roue (34) sur le moyeu rigide (31) d'une part, sur la bande de cisaillement (20) d'autre part, sont par exemple en forme de "I" ou de demis "U", constitués d'un matériau composite (fibre-résine), par exemple en fibre de verre/ résine vinylester, d'épaisseur égale à environ 1 mm. Ils ont par exemple été fabriqués comme précédemment indiqué pour les couches de composite verre-résine, par enroulement filamentaire en 5 empilements successifs, sur un support ayant la forme d'un cylindre aplati. Après polymérisation aux UV, les demis « U » ont été obtenus par découpe du cylindre aplati. Les inserts (35b) assemblant les rayons de roue (34) sur la face circonférentielle interne (référencée par exemple 2c sur la figure 2) du stratifié (20) sont par exemple de même épaisseur mais de taille plus réduite, par exemple en forme de "I" ou de demis "U", eux-mêmes en matériau composite tel que fibre de verre/ résine vinylester ; ils ont été fabriqués comme précédemment indiqué pour les autres inserts. Par leur capacité de flexion, des inserts par exemple en forme de demis « U » peuvent contribuer avantageusement à l'allongement nécessaire des rayons de roue au cours du fonctionnement de la roue élastique de l'invention, notamment lorsque ces derniers peuvent présenter une élasticité insuffisante.

Pour la fabrication de la roue (30) de l'invention illustrée par exemple aux figures 3 et 4, on peut utiliser tout procédé d'assemblage approprié des éléments décrits ci-dessus, par exemple en adoptant les étapes consécutives suivantes:
- fabrication du stratifié (10, 20) comme précédemment décrit, pour constitution de la bande de cisaillement (32) ;
- positionnement (boulonnage côté moyeu) et collage des rayons de roue (34) ;
- par exemple, les rayons (34) sont ajustés à la bonne longueur et collés à leurs deux extrémités sur des barrettes (inserts 35a, 35b) en composite adaptées l'une à la couche composite la plus radialement interne (2c) du stratifié (20), l'autre au moyeu métallique (31) ; par exemple, la barrette (35b) côté bande de cisaillement sera rivetée, alors que celle (35a) côté moyeu est boulonnée ;
- positionnement de la bande de roulement (33) et de ses éléments métalliques en acier inox, sur la bande de cisaillement ; on utilise avantageusement une couche adhésive ultrafine (par exemple en silicone « KE-183-U ») pour optimiser alors le contact entre d'une part la face externe (33b) et la face interne (33a) de la bande de roulement en acier inox, et d'autre part entre la face interne (33a) et la face supérieure (2b) en composite verre-résine de la bande de cisaillement (20) ;
- perçage simultané de la face interne (33a) de la bande de roulement (33), de la bande de cisaillement (20) complète (couches de composite et couches de caoutchouc silicone), de la barrette (35b) et des rayons (34) de roue, puis rivetage de l'ensemble à travers les trous de perçage ci-dessus.

En résumé, la roue de l'invention constitue une alternative économiquement très avantageuse aux roues dont la couche de cisaillement est constituée de cylindres composites déformables tels que décrits dans les demandes citées en introduction du présent mémoire. Comme ces dernières, elle permet une utilisation dans des gammes de température très larges, pouvant varier typiquement de -250°C à +150°C, mais elle est beaucoup plus simple à fabriquer.

Enfin, ce qui n'est pas le moindre, des tests de roulage sévères (sur sols très agressifs) conduits sur les roues non pneumatiques de l'invention illustrées à la figure 3, ont révélé que leur produit stratifié, comparé aux stratifiés des roues de l'art antérieur ci-dessus, apportait en outre une raideur au moins équivalente à la bande de cisaillement tout en conférant plus de souplesse à la structure de la roue, lui permettant de mieux encaisser les chocs et absorber les obstacles.

## Revendications

1. Roue élastique non pneumatique (30), définissant trois directions perpendiculaires, circonférentielle (X), axiale (Y) et radiale (Z), comportant au moins :
- un moyeu (31) ;
- une bande annulaire dite de cisaillement (32) orientée selon la direction circonférentielle (X), surmontée d'une bande de roulement (33) ;
- une pluralité d'éléments de support (34) connectant le moyeu (31) à la bande annulaire dite de cisaillement (32),
la bande annulaire dite de cisaillement (32) étant constituée par un stratifié (10 ; 20), **caractérisée en ce que** ledit stratifié (10 ; 20) de la bande annulaire dite de cisaillement (32) comporte au moins une couche (1 ; 1a, 1b) de caoutchouc silicone disposée en sandwich entre deux couches (2 ; 2a, 2b, 2c) de composite fibre-résine comportant des filaments (3) d'une matière minérale (4) noyés dans une résine thermodurcie (5).

2. Roue selon la revendication 1, dans laquelle l'au moins une couche (1 ; 1a, 1b) de caoutchouc silicone a une épaisseur notée T₁ qui est supérieure à l'épaisseur notée T₂ de chaque couche (2 ; 2a, 2b, 2c) de composite fibre-résine, T₁ étant de préférence comprise entre 1,5 et 3 fois

3. Roue selon les revendications 1 ou 2, dans laquelle l'au moins une couche (1 ; 1a, 1b) de caoutchouc silicone a une épaisseur notée T₁ comprise entre 1 et 3 mm, de préférence entre 1,5 et 2,5 mm, et dans laquelle chaque couche (2 ; 2a, 2b, 2c) de composite fibre-résine a une épaisseur notée T₂ comprise entre 0,25 et 2 mm, de préférence entre 0,5 et 1,5 mm.

4. Roue selon l'une quelconque des revendications 1 à 3, dans laquelle le stratifié (10 ; 20) comporte au moins deux couches (1 ; 1a, 1b) de caoutchouc silicone et trois couches (2 ; 2a, 2b, 2c) de composite fibre-résine.

5. Roue selon l'une quelconque des revendications 1 à 4, dans laquelle l'au moins une couche (1 ; 1a, 1b) de caoutchouc silicone et les couches (2 ; 2a, 2b, 2c) de composite fibre-résine sont liées entre elles par au moins un primaire d'adhésion, de préférence à base d'un organosilane ou organopolysiloxane.

6. Roue selon l'une quelconque des revendications 1 à 5, dans laquelle le caoutchouc silicone présente un module sécant apparent en extension, à 10% d'allongement, noté MSA10, mesuré à 20°C, qui est inférieur à 5 MPa, de préférence compris entre 1 et 5 MPa, la mesure dudit module étant effectuée selon la norme NF-T-46-002 de septembre 1988 dans les conditions normales d'hygrométrie, 50 ± 5% d'humidité relative, selon la norme française NF-T-40-101 de décembre 1979.

7. Roue selon l'une quelconque des revendications 1 à 6, dans laquelle le caoutchouc silicone présente un allongement à la rupture en traction, noté At, mesuré à 20°C, qui est supérieur à 350%, de préférence supérieur à 400%, la mesure dudit allongement étant effectuée selon la norme NF-T-46-002 de septembre 1988 dans les conditions normales d'hygrométrie, 50 ± 5% d'humidité relative, selon la norme française NF-T-40-101 de décembre 1979.

8. Roue selon l'une quelconque des revendications 1 à 7, dans laquelle le caoutchouc silicone est du type réticulable à chaud.

9. Roue selon l'une quelconque des revendications 1 à 8, dans laquelle le caoutchouc silicone est de grade MQ, FMQ, PMQ, VMQ, PVMQ ou FVMQ, selon une classification selon la norme ASTM D1418, de préférence de grade VMQ ou PVMQ.

10. Roue selon l'une quelconque des revendications 1 à 9, dans laquelle le caoutchouc silicone présente une température de transition vitreuse notée Tg₁ qui est inférieure à -100°C, de préférence inférieure à -110°C, mesurée par DSC au second passage selon la norme ASTM D3418 de 1999.

11. Roue selon la revendication 10, dans laquelle le caoutchouc silicone présente un module sécant apparent en extension, à 10% d'allongement, noté MSA10, mesuré à -100°C, qui est inférieur à 30 MPa, de préférence inférieur à 20 MPa, et un allongement à la rupture en traction, noté At, mesuré à -100°C, qui est supérieur à 100%, de préférence supérieur à 150%, les mesures dudit module et dudit allongement étant effectuées selon la norme NF-T-46-002 de septembre 1988 dans les conditions normales d'hygrométrie, 50 ± 5% d'humidité relative, selon la norme française NF-T-40-101 de décembre 1979.

12. Roue selon l'une quelconque des revendications 1 à 11, dans laquelle le caoutchouc silicone est une composition à base du caoutchouc silicone et d'au moins un additif.

13. Roue selon la revendication 12, dans laquelle l'additif est un agent de réticulation, de préférence du type peroxyde organique, ou une charge, de préférence du type silice.

14. Roue selon l'une quelconque des revendications 1 à 13, dans laquelle la matière minérale (4) est du verre.

15. Roue selon l'une quelconque des revendications 1 à 14, dans laquelle la température de transition vitreuse notée Tg₂ de la résine thermodurcie (5) est supérieure à 30°C, de préférence supérieure à 70°C, mesurée par DSC au second passage selon la norme ASTM D3418 de 1999.

## Patentansprüche

1. Elastisches luftloses Rad (30), das drei senkrecht zueinander verlaufende Richtungen definiert, eine Umfangsrichtung (X), eine axiale Richtung (Y) und eine radiale Richtung (Z), und mindestens Folgendes umfasst:
- eine Nabe (31);
- eine als Schubfläche bezeichnete ringförmige Fläche (32), die in der Umfangsrichtung (X) ausgerichtet ist und über der sich eine Lauffläche (33) befindet;
- eine Vielzahl von Stützelementen (34), die die Nabe (31) mit der als Schubfläche bezeichneten ringförmigen Fläche (32) verbinden,
wobei die als Schubfläche bezeichnete ringförmige Fläche (32) von einem Schichtstoff (10; 20) gebildet ist,
**dadurch gekennzeichnet, dass** der Schichtstoff (10; 20) der als Schubfläche bezeichneten ringförmigen Fläche (32) mindestens eine Silikonkautschukschicht (1; 1a, 1b) aufweist, die zwischen zwei Faserharzverbundwerkstoffschichten (2; 2a, 2b, 2c) angeordnet ist, die Filamente (3) aus einem mineralischen Material (4) aufweisen, die in einem wärmehärtbaren Harz (5) eingebettet sind.

2. Rad nach Anspruch 1, wobei die mindestens eine Silikonkautschukschicht (1; 1a, 1b) eine mit T₁ angegebene Dicke aufweist, die dicker ist als die mit T₂ angegebene Dicke jeder Faserharzverbundwerkstoffschicht (2; 2a, 2b, 2c), wobei T₁ vorzugsweise zwischen dem 1,5- und 3-Fachen von T₂ liegt.

3. Rad nach Anspruch 1 oder 2, wobei die mindestens eine Silikonkautschukschicht (1; 1a, 1b) eine mit T₁ angegebene Dicke zwischen 1 und 3 mm, vorzugsweise zwischen 1,5 und 2,5 mm aufweist, und wobei jede Faserharzverbundwerkstoffschicht (2; 2a, 2b, 2c) eine mit T₂ angegebene Dicke zwischen 0,25 und 2 mm, vorzugsweise zwischen 0,5 und 1,5 mm aufweist.

4. Rad nach einem der Ansprüche 1 bis 3, wobei der Schichtstoff (10; 20) mindestens zwei Silikonkautschukschichten (1; 1a, 1b) und drei Faserharzverbundwerkstoffschichten (2; 2a, 2b, 2c) aufweist.

5. Rad nach einem der Ansprüche 1 bis 4, wobei die mindestens eine Silikonkautschukschicht (1; 1a, 1b) und die Faserharzverbundwerkstoffschichten (2; 2a, 2b, 2c) untereinander über mindestens einen Haftvermittler verbunden sind, vorzugsweise auf Basis eines Organosilans oder Organopolysiloxans.

6. Rad nach einem der Ansprüche 1 bis 5, wobei der Silikonkautschuk einen mit MSA10 angegebenen, bei 20°C gemessenen scheinbaren Elastizitätsmodul als Sekantenmodul bei 10% Dehnung aufweist, der unter 5 MPa beträgt, vorzugsweise zwischen 1 und 5 MPa liegt, wobei die Messung des Moduls nach der Norm NF-T-46-002 von September 1988 unter normalen Feuchtigkeitsbedingungen, 50 ± 5% relative Feuchte, nach der französischen Norm NF-T-40-101 vom Dezember 1979 erfolgt.

7. Rad nach einem der Ansprüche 1 bis 6, wobei der Silikonkautschuk eine mit At angegebene, bei 20°C gemessene Bruchdehnung aufweist, die über 350%, vorzugsweise über 400% liegt, wobei die Messung der Dehnung nach der Norm NF-T-46-002 von September 1988 unter normalen Feuchtigkeitsbedingungen, 50 ± 5% relative Feuchte, nach der französischen Norm NF-T-40-101 vom Dezember 1979 erfolgt.

8. Rad nach einem der Ansprüche 1 bis 7, wobei der Silikonkautschuk hochtemperaturvernetzend ist.

9. Rad nach einem der Ansprüche 1 bis 8, wobei der Silikonkautschuk vom Typ MQ, FMQ, PMQ, VMQ, PVMQ oder FVMQ, entsprechend einer Klassifizierung nach der Norm ASTM D1418, vorzugsweise vom Typ VMQ oder PVMQ ist.

10. Rad nach einem der Ansprüche 1 bis 9, wobei der Silikonkautschuk eine mit Tg₁ angegebene, mittels DSC im zweiten Durchgang nach der Norm ASTM D3418 von 1999 gemessene Glasübergangstemperatur Tg₁ aufweist, die unter -100°C, vorzugsweise unter - 110°C beträgt.

11. Rad nach Anspruch 10, wobei der Silikonkautschuk einen mit MSA10 angegebenen, bei -100°C gemessenen scheinbaren Elastizitätsmodul als Sekantenmodul bei 10% Dehnung aufweist, der unter 30 MPa, vorzugsweise unter 20 MPa liegt, und eine mit At angegebene, bei -100°C gemessene Bruchdehnung aufweist, die über 100%, vorzugsweise über 150% liegt, wobei die Messung des Moduls und der Dehnung nach der Norm NF-T-46-002 von September 1988 unter normalen Feuchtigkeitsbedingungen, 50 ± 5% relative Feuchte, nach der französischen Norm NF-T-40-101 vom Dezember 1979 erfolgt.

12. Rad nach einem der Ansprüche 1 bis 11, wobei der Silikonkautschuk eine Zusammensetzung auf Basis von Silikonkautschuk und mindestens einem Zusatzstoff ist.

13. Rad nach Anspruch 12, wobei der Zusatzstoff ein Vernetzungsmittel, vorzugsweise vom Typ organisches Peroxid, oder ein Füllstoff, vorzugsweise vom Typ Siliciumdioxid, ist.

14. Rad nach einem der Ansprüche 1 bis 13, wobei das mineralische Material (4) Glas ist.

15. Rad nach einem der Ansprüche 1 bis 14, wobei die mit Tg₂ angegebene, mittels DSC im zweiten Durchgang nach der Norm ASTM D3418 von 1999 gemessene Glasübergangstemperatur des wärmehärtbaren Harzes (5) über 30°C, vorzugsweise über 70°C beträgt.

## Claims

1. Non-pneumatic elastic wheel (30) defining three perpendicular directions, circumferential (X), axial (Y) and radial (Z), comprising at least:
- a hub (31);
- an annular band known as a shear band (32) oriented in the circumferential direction (X), surmounted by a tread (33);
- a plurality of support elements (34) connecting the hub (31) to the annular band known as a shear band (32),
the annular band known as a shear band (32) being formed by a laminate (10; 20), characterized the annular band known as a shear band (32) comprise at least one layer (1; 1a, 1b) of silicone rubber sandwiched between two layers (2; 2a,2b,2c) of fibre-resin composite comprising filaments (3) of an inorganic substance (4) embedded in a thermoset resin (5).

2. Wheel according to Claim 1, wherein the at least one layer (1; 1a, 1b) of silicone rubber has a thickness, denoted T₁, which is greater than the thickness, denoted T₂, of each layer (2; 2a, 2b, 2c) of fibre resin composite, T₁ being preferably between 1.5 and 3 times

3. Wheel according to Claim 1 or 2, wherein the at least one layer (1; 1a, 1b) of silicone rubber has a thickness denoted T₁ of between 1 and 3 mm, preferably between 1.5 and 2.5 mm, and wherein each layer (2; 2a, 2b, 2c) of fibre resin composite has a thickness denoted T₂ of between 0.25 and 2 mm, preferably between 0.5 and 1.5 mm.

4. Wheel according to any one of Claims 1 to 3, wherein the laminate (10; 20) comprises at least two layers (1; 1a, 1b) of silicone rubber and three layers (2; 2a, 2b, 2c) of fibre-resin composite.

5. Wheel according to any one of Claims 1 to 4, wherein the at least one layer (1; 1a, 1b) of silicone rubber and the layers (2; 2a, 2b, 2c) of fibre-resin composite are joined together by at least one adhesion primer, preferably based on an organosilane or organopolysiloxane.

6. Wheel according to any one of Claims 1 to 5, wherein the silicone rubber exhibits an apparent secant tensile modulus, at 10% elongation denoted ASM10, measured at 20°C, which is less than 5 Mpa, preferably comprised between 1 and 5 Mpa, the measurement of said modulus being carried out according to Standard NF-T-46-002 of September 1988 under the standard conditions hygrometry, 50 ± 5% relative humidity, according to French Standard NF-T-40-101 of December 1979.

7. Wheel according to any one of Claims 1 to 6, wherein the silicone rubber exhibits a tensile elongation at break, denoted Et, measured at 20°C, which is greater than 350%, preferably greater than 400%, the measurement of said elongation being carried out according to Standard NF-T-46-002 of September 1988 under the standard conditions hygrometry, 50 ± 5% relative humidity, according to French Standard NF-T-40-101 of December 1979.

8. Wheel according to any one of Claims 1 to 7, wherein the silicone rubber is of the high temperature crosslinking type.

9. Wheel according to any one of Claims 1 to 8, wherein the silicone rubber is of MQ, FMQ, PMQ, VMQ, PVMQ or FVMQ grade according to a classification according to Standard ASTM D1418., preferably of VMQ or PVMQ grade.

10. Wheel according to any one of Claims 1 to 9, wherein the silicone rubber exhibits a glass transition temperature, denoted Tg₁, which is less than -100°C, preferably less than -110°C, measured by DSC at the second pass according to Standard ASTM D3418 of 1999.

11. Wheel according to Claim 10, wherein the silicone rubber exhibits an apparent secant tensile modulus, at 10% elongation, denoted ASM10, measured at -100°C, which is less than 30 MPa, preferably less than 20 Mpa, and a tensile elongation at break, denoted Et, measured at -100°C, which is greater than 100%, preferably greater than 150%, the measurement of said modulus and said elongation being carried out according to Standard NF-T-46-002 of September 1988 under the standard conditions hygrometry, 50 ± 5% relative humidity, according to French Standard NF-T-40-101 of December 1979.

12. Wheel according to any one of Claims 1 to 11, wherein the silicone rubber is a composition based on silicone rubber and on at least one additive.

13. Wheel according to Claim 12, the additive being a crosslinking agent, preferably of the organic peroxide type, or a filler, preferably of the silica type.

14. Wheel according to any one of Claims 1 to 13, wherein the inorganic substance (4) is glass.

15. Wheel according to any one of Claims 1 to 14, wherein the glass transition temperature denoted Tg₂ of the thermoset resin (5) is greater than 30°C, preferably greater than 70°C, measured by DSC at the second pass according to Standard ASTM D3418 of 1999.
